# EUROPEAN PATENT APPLICATION

(11) **EP 2 509 194 A1**
(43) Date of publication of application: **10.10.2012**
(21) Application number: 11160968.1
(22) Date of filing: 04.04.2011
(51) Int. Cl.: H02K 1/20

(54) **Generator for an electrical machine**

(71) Applicant: SIEMENS AKTIENGESELLSCHAFT, 80333 München (DE)
(72) Inventor: Le Besnerais, Jean, 59370, Mons en Baroeul (FR)

(57) **Abstract**

Generator (1) for an electrical machine having a stator (2) and a rotor (3), with the stator (2) comprising a stator stack (4) having a number of adjacently disposed metal plates (5), whereby a number of radial duct-like channels (6) is provided between respective metal plates (5) by means of a respective number of spacers (7), wherein in order to build radial duct-like channels (6) with different axial widths (w), the respective spacers (7) have different axial widths (w).

## Description

The invention relates to a generator for an electrical machine having a stator and a rotor, with the stator comprising a stator stack having a number of adjacently disposed metal plates, whereby a number of radial duct-like channels is provided between respective metal plates by means of a respective number of spacers.

Electromagnetic losses or so called copper losses causing undesired heating represent a well-known problem during the operation of electrical machines such as generators or the like. The heating may lead to lowered efficiency or even damage or a reduction of the life time, particularly the insulation life time of the electrical machine.

It is widely known to cool the stator stack of a respective electrical machine by blowing a gaseous cooling medium such as particularly air through the end or overhang windings of the stator into the air gap between the stator and the rotor as well as through radial duct-like channels which are usually provided by means of so called spacers. The spacers regularly share the same dimensions and are evenly spaced.

Thereby, the predominant aim can be seen in establishing an even gas flow along the entire axial length of the stator windings, i.e. from the end windings to the axially inner portions of the stator windings as well as an even gas flow through all radial duct-like channels within the stator stack. This is problematic due to the so called Venturi effect leading to an uneven gas flow through the stator stack. That is, the radial duct-like channels in the area of the end windings are regularly exposed to smaller gas flow in comparison to the radial duct-like channels within the stator stack.

Thus, the known approaches for cooling a generator may not assure a sufficient and particularly constant, even flow of a gaseous cooling medium. Hence, the cooling capability as well as the cooling efficiency is oftentimes not satisfying.

It is the object of the present invention to improve the cooling properties of a generator, particularly regarding an even flow of a gaseous cooling medium through the stator stack.

This is inventively achieved by a generator as has been initially described which is characterised in that in order to build radial duct-like channels with different axial widths, the respective spacers have different axial widths.

The invention is based on the idea to provide an at least essentially even flow of a gaseous cooling medium and/or an at least essentially even distribution of the flow rate of the gaseous cooling medium within a stator by means of providing the respective radial duct-like channels with different axial widths which is achieved by providing the respective spacers with different axial widths. Hence, the axial widths of the respective radial duct-like channels as well as the axial widths of the spacers are concertedly adapted to a desired flow of a gaseous cooling medium such as air for instance.

Thereby, the axial widths of the respective spacers may gradually or individually differ so as to realise the mentioned at least essentially even flow of the gaseous cooling medium. Thereby, an essentially even flow of the gaseous cooling medium also concerns embodiments in which the flow of the gaseous cooling medium is solely even in discrete sections of the axial length of the stator.

Thus, the knowledge of the Venturi effect is used to provide the inventive generator, i.e. particularly the stator, with an essentially even flow of the gaseous cooling medium due to the different widths of the radial duct-like channels and the spacers, respectively. That is, the inventive principal assures an essentially even distribution of the flow rate of the gaseous cooling medium preferably along the entire axial length of the stator. Hence, the known uneven distribution of the flow rate, i.e. particularly high flow rates in the inner portions of the stator in comparison to the outer portions of the stator, is diminished. In such a manner, the cooling efficiency of the stator is significantly improved. The same applies to the inventive generator.

Aside, an even distribution of the flow of the gaseous cooling medium gives rise to a more even temperature distribution. Likewise, higher loss densities and lower fan power leading to a reduced electrical consumption of the respective fan(s) may be realised.

According to a preferred embodiment of the invention, the axial widths of the respective spacers decreases from the face sides of the stator stack to the centre of the stator stack. Hence, the respective spacers having an axially outer position with respect to the axial centre of the stator are thicker in comparison to the respective spacers having an axially inner position with respect to the axial centre of the stator. Preferably, yet not necessarily required, the widths of the respective spacers axially decrease in uniform manner from both face sides of the stator towards the centre of the stator.

As an example, it is possible that the widths of the respective adjacently disposed spacers decrease by a given value, i.e. a first spacer having an axially most outer position has a width of 100%, an axially adjacently disposed second spacer, i.e. the spacer following the first spacer, has a width of 95% in comparison to the first spacer, a third spacer being axially adjacently disposed to the second spacer has a width of 90% in comparison to the first spacer, etc. Thereby, a minimum allowable widths of the spacers may be advisable, i.e. that the thinnest spacer has a minimum width of 30% of the thickest spacer for instance.

Absolute values of the widths of the respective spacers depend on the total axial dimensions of the stator, which are mainly defined by the number and thickness of the respective metal plates building the stator stack.

However, it is also possible to individually, i.e. non-uniformly reduce the thickness of the respective spacers from the face side of the stator to the axial centre of the stator.

Additionally, it is possible that the axial distance of the respective adjacently disposed radial duct-like channels varies along the axial length of the stator stack. In such a manner, the distribution of the flow profile of the gaseous cooling medium may be additionally adapted. This is essentially achieved by varying the number of metal plates between the respective radial duct-like channels. The distance of the respective adjacently disposed radial duct-like channels may vary in uniform or non-uniform manner. Concerning the entire axial length of the stator, the distance of the respective adjacently disposed radial duct-like channel may vary solely in discrete sections of the axial length of the stator or along the entire axial length of the stator.

Thereby, it is preferred that the axial distance of the respective adjacently disposed spacers increases from the face sides of the stator stack to the centre of the stator stack. In such a manner, by varying the number of metal plates between the respective spacers the axial positions of the respective radial duct-like channels may be varied as well. Hence, an adjustment of the flow of the gaseous cooling medium leading to improved cooling of the stator may be obtained.

It is of advantage when the spacers have an aerodynamic shape. In such a manner, a further improved flow of the gaseous cooling medium through the stator of the generator is attainable. Respective aerodynamic shapes may control or direct a gas flow in a desired manner contributing to an improved cooling capability of the generator as a whole. Specific surface structures of the spacers may also be of advantage since they may also support proper conveyance of a gaseous cooling medium within the generator, that is especially the stator radial duct-like channels.

The aerodynamic shape of the spacers may be provided by a wedge-like or cone-like shape. The shapes are notably adapted to control or direct a gas flow. Nevertheless, other shapes of the spacers are applicable as well.

In an advantageous embodiment of the invention, the spacers are made of a thermally conductive material. Thus, the spacers may drag heat from the stator windings and the stator stack which additionally increases the cooling performance. Possibly, means for better transport of thermal energy such as heat transfer pastes or the like may be useful in addition.

Thereby, it is preferred that the thermally conductive material is a metal, in particular a copper-based metal. Metals usually comprise good thermal conductivities, that is have comparatively high coefficients of thermal conductivity and hence, contribute to good heat transfer behaviour of the spacers. Thereby, copper or copper alloys are in favour since they exhibit an outstanding heat conducting capability. It is understood that other materials having good heat conducting behaviour such as highly graphite filled polymers for instance are applicable as well.

The invention also refers to a wind turbine, in particular a direct drive wind turbine, comprising a generator as described before.

In the following the invention is described in detail as reference is made to the figures, whereby:
- fig. 1: shows a principle cut view of an inventive generator according to a first exemplary embodiment of the invention;
- fig. 2: shows a principle cut view of an inventive generator according to a second exemplary embodiment of the invention;
- fig. 3: shows a principle cut view of an inventive generator according to a third exemplary embodiment of the invention; and
- fig. 4: shows a diagram depicting the flow rate v of a gaseous cooling medium in dependence of the axial length of a stator stack.

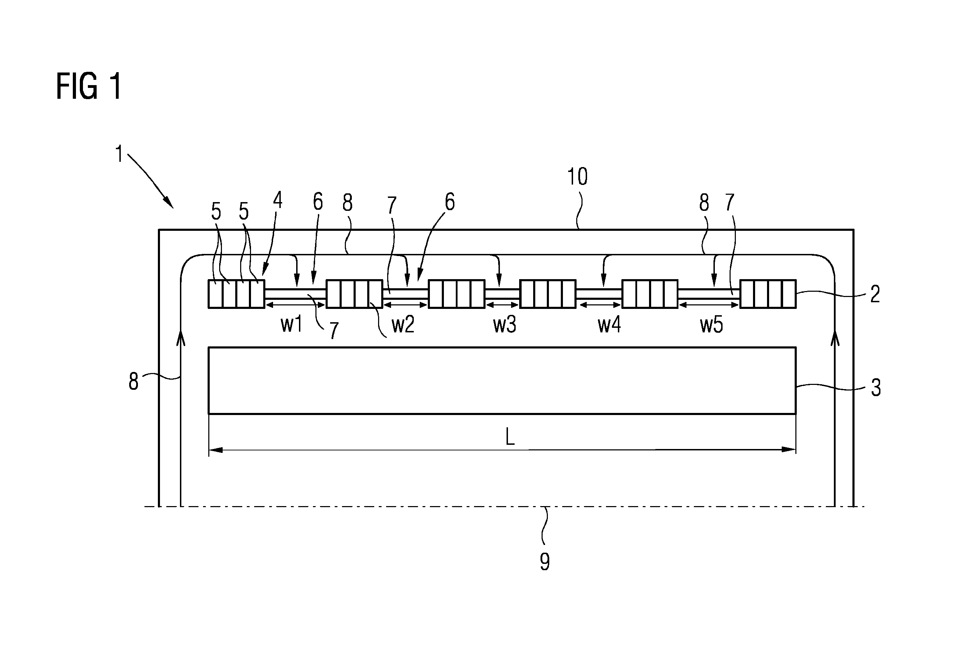

Fig. 1 shows a principle cut view of an inventive generator 1 according to a first exemplary embodiment of the invention. The generator 1 is preferably installed in a direct drive wind turbine (not shown) and comprises a stator 2 and a rotor 3, the latter being rotatably around the stator 2. The stator 2 comprises a stator stack 4 having a number of adjacently disposed metal plates 5. Radial duct-like channels 6 radially extend between respective groups of adjacently disposed metal plates 5. The radial duct-like channels 6 are built and defined by respective spacers 7. The spacers 7 are made of a thermally conductive material such as copper and preferably comprise an aerodynamic, that is particularly cone-like shape so as to promote a stream of a gaseous cooling medium (as indicated by the arrows 8) through the respective radial duct-like channels 6, i.e. the stator stack 4 along the axial length L of the generator 1 (cf. centre axis 9 of the generator 1). The generator 1 comprises a housing 10 encasing the stator 2 and the rotor 3.

As is discernible, the respective spacers 7 have different axial widths w1, w2, w3, w4, w5. Accordingly, the radial duct-like channels 6 have different axial widths w1, w2, w3, w4, w5 as well. Particularly, the axial widths w of the respective radial duct-like channels 6 gradually decreases from the face sides of the stator stack 4 towards the centre of the stator stack 4. Accordingly, the axial widths w of the respective spacers 7 gradually decreases from the outside of the stator stack 4 towards the centre of the stator stack 4, i.e. the widths w of the respective spacers 7 and radial duct-like channels 6 follows w1 > w2 > w3 and due to the symmetrical construction of the stator stack 4 w5 > w4 > w3. Thereby, the widths w1 and w5 as well as the widths w2 and w4 correspond to each other, i.e. are the same.

In such a manner, an essentially even and constant distribution of the flow rate of the gaseous cooling medium is attained along the entire length L of the stator stack 4 (cf. fig. 5, line 11) giving rise to improved cooling properties of the stator 2 and the generator 1 as a whole.

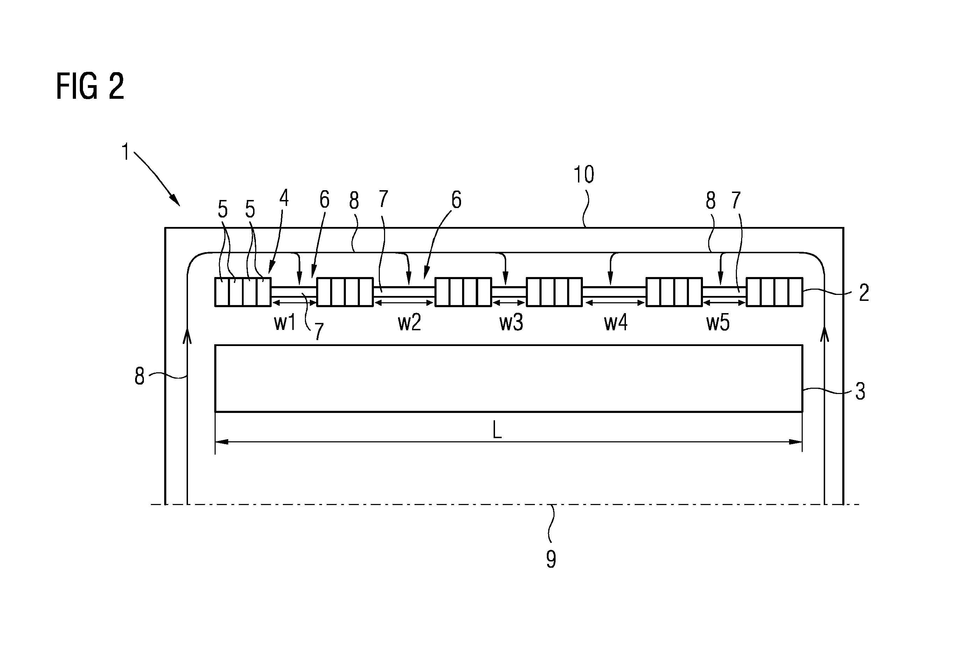

Fig. 2 shows a principle cut view of an inventive generator 1 according to a second exemplary embodiment of the invention. In comparison to the embodiment depicted in fig. 1, the widths w of the respective spacers 7 and radial duct-like channels 6 do not decrease in uniform but in non-uniform manner. Accordingly, the respective widths w follow w2 > w1 > w3 and due to the symmetrical construction of the stator stack 4 w4 > w5 > w3. Thus, emanating from the face sides of the stator stack 4, the second spacer 7 is the thickest followed by the respective first spacer 7 and lastly, the spacer 7 disposed in the centre of the stator stack 4 essentially having a position at L/2.

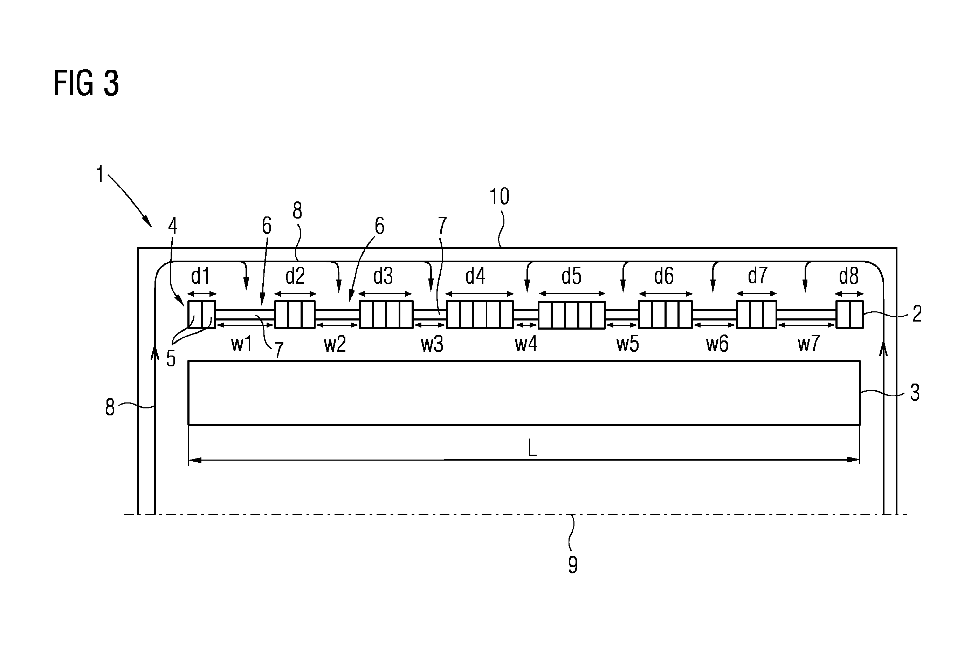

Fig. 3 shows a principle cut view of an inventive generator 1 according to a third exemplary embodiment of the invention. Thereby, the essential difference to the embodiments shown in figs. 1, 2 lies in that additionally, the axial distance d of the respective adjacently disposed radial duct-like channels 6 varies along the axial length L of the stator stack 4. As is discernible, the number of the respective adjacently disposed groups of metal plates 5 varies along the axial length L of the stator stack 4. That is, the axial distances d of the radial duct-like channels 6 increases from the face side of the stator stack 4 to the centre of the stator stack 4, which is achieved in that the respective number of metal plates 5 building respective groups of metal plates 5 increases from the face sides of the stator stack 4 towards the centre of the stator stack 4 as well.

In the exemplary embodiment shown in fig. 3, emanating from the left face side of the stator stack 4, the first group of metal plates 5 comprises two metal plates 5, the adjacently disposed second group of metal plates 5 comprises three metal plates 5, the adjacently disposed third group of metal plates 5 comprises four metal plates 5 and the adjacently disposed fourth group of metal plates 5 comprises five metal plates 5. The same applies for the respective groups of metal plates when emanating from the right face side of the stator stack 4 towards the centre of the stator stack 4 due to the symmetrical construction of the stator stack 4. Hence, the axial distances d between the respective radial duct-like channels 6 follow d1 < d2 < d3 < d4 and due to the symmetrical construction of the stator stack 4 d8 < d7 < d6 < d5.

Of course, the number of the respective metal plates 5 forming respective groups of metal plates 5 is only of exemplary nature.

The respective widths w of the radial duct-like channels 6 and the spacers 7 correspond to the embodiment shown in fig. 1 or fig. 2.

It is understood that the inventive principle also applies to stators 2 with a higher number of respective radial duct-like channels 6 and spacers 7 than shown in the preceding fig. 1, 2, and 3.

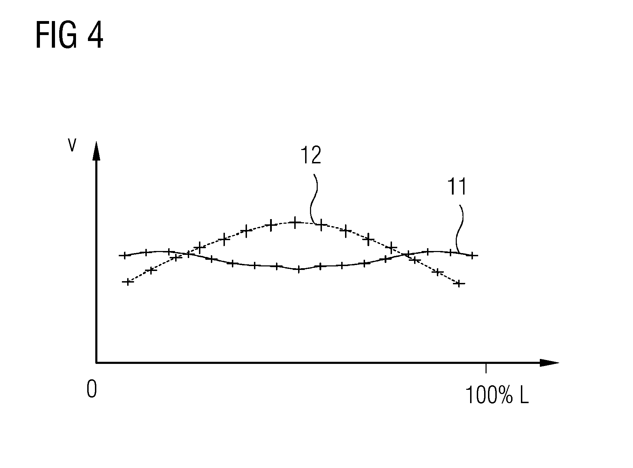

Fig. 4 shows a diagram depicting the flow rate v (y-axis) of a gaseous cooling medium such as air in dependence of the axial length L (x-axis) of a stator stack given in percent. Line 11 indicates an essentially even distribution of the flow rate v along the entire length L of the stator stack 4. In contrast, the dotted line 12 indicates a distribution of the flow rate v of known arrangements of radial duct-like channels 6 and spacers 7 according to prior art. As is discernible, the inventive principle does not lead to a hyperbolic behaviour indicating lower flow rates in the region of the face sides of the stator stack 4 and higher flow rates in the centre region of the stator stack 4, but an essentially uniform flow rate along the entire length L of the stator stack 4. In such a manner, the inventive principle offers a considerably improved cooling behaviour of the stator 2 and the generator 1.

## Claims

1. Generator (1) for an electrical machine having a stator (2) and a rotor (3), with the stator (2) comprising a stator stack (4) having a number of adjacently disposed metal plates (5), whereby a number of radial duct-like channels (6) is provided between respective metal plates (5) by means of a respective number of spacers (7), **characterised in that** in order to build radial duct-like channels (6) with different axial widths (w), the respective spacers (7) have different axial widths (w).

2. Generator according to claim 1, wherein the axial width (w) of the respective spacers (7) decreases from the face sides of the stator stack (4) to the centre of the stator stack (4).

3. Generator according to claim 1 or 2, wherein additionally, the axial distance (d) of the respective adjacently disposed radial duct-like channels (6) varies along the axial length (L) of the stator stack (4).

4. Generator according to claim 3, wherein the axial distance (d) of the respective adjacently disposed radial duct-like channels (6) increases from the face sides of the stator stack (4) to the centre of the stator stack (4).

5. Generator according to any of the preceding claims, wherein the spacers (7) have an aerodynamic shape.

6. Generator according to claim 5, wherein the aerodynamic shape is a wedge-like or cone-like shape.

7. Generator according to one of the preceding claims, wherein the spacers (7) are made of a thermally conductive material.

8. Generator according to claim 7, wherein the thermally conductive material is a metal, in particular a copper-based metal.

9. Wind turbine, in particular direct drive wind turbine, comprising a generator (1) according to one of the preceding claims.
